# EUROPÄISCHE PATENTSCHRIFT

(11) **EP 0 968 811 B1**
(45) Veröffentlichungstag und Bekanntmachung des Hinweises auf die Patenterteilung: **14.08.2002**
(21) Anmeldenummer: 99111583.3
(22) Anmeldetag: 15.06.1999
(51) Int. Cl.: B29C 47/92, B29B 7/72, B01F 5/06, B01F 15/00

(54) **Dynamisches Mischrohr**
Dynamic mixing tube
Tuyau mélangeur dynamique

(30) Priorität: 03.07.1998 DE 29811899 U
(43) Veröffentlichungstag der Anmeldung: 05.01.2000
(73) Patentinhaber: Hilger u. Kern GmbH, D-68167 Mannheim (DE)
(72) Erfinder: Ehrle, Klaus, 68642 Bürstadt (DE); Wehner, Arthur, 68723 Plankstadt (DE)
(74) Vertreter: Fischer, Wolf-Dieter, Dipl.-Ing.

(56) Entgegenhaltungen:
- US-A- 4 759 890
- PATENT ABSTRACTS OF JAPAN vol. 15, no. 300, 30. Juli 1991 (1991-07-30) & JP 03 103748 A (NIPPON STEEL CORP), 30. April 1991 (1991-04-30)
- PATENT ABSTRACTS OF JAPAN vol. 16, no. 007, 9. Januar 1992 (1992-01-09) & JP 03 230932 A (SEKISUI CHEM CO LTD), 14. Oktober 1991 (1991-10-14)
- PATENT ABSTRACTS OF JAPAN vol. 13, no. 069, 16. Februar 1989 (1989-02-16) & JP 63 258627 A (NOK CORP), 26. Oktober 1988 (1988-10-26)

## Beschreibung

Die Erfindung betrifft ein dynamisches Mischrohr für eine Vorrichtung zum Dosieren und Mischen von mehrkomponentigen Medien, insbesondere von zwei Materialkomponenten mit einem Auslassventil und nachgeordnetem Mischrohr mit einem rotierenden Mischelement.

Es sind Vorrichtungen bekannt, bei denen zwei Komponenten A und B dosiert einem statischen oder dynamischen Mischsystem zugeführt werden. Bei den meisten derartigen mehrkomponentigen Medien kommt es auf eine homogene Vermischung an, denn Mischfehler können sich beispielsweise bei Lack- oder Klebermischungen besonders nachteilig auswirken, weil die derart behandelten Teile dann als Ausschuß behandelt werden müssen. Ein solches dynamisches Mischsystem weist beispielsweise ein Kunststoffmischrohr auf, in dem ein rotierendes Mischelement, insbesondere eine Mischwendel angeordnet ist. Vor dem dynamischen Mischer befindet sich ein Auslaßventil, wobei dieses Auslaßventil über einen elektrischen/pneumatischen Motor zum Antrieb des Mischelementes verfügt. Die beiden Materialkomponenten werden in das Mischrohr eingeflutet und durch das rotierende Mischelement nach einer bestimmten Gesetzmäßigkeit über die Länge des Mischrohres homogen vermischt. Da eine gute Homogenisierung des Materials von der Drehzahl der Mischwendel abhängig ist, muß diese erfaßt werden. Bisher erfolgt lediglich eine Erfassung der Drehzahl der antreibenden Motorwelle. Außerdem erfolgt über die Länge des Mischrohres mit zunehmender Homogenisierung des Materials eine Zunahme der Mischviskosität. Bei Überschreiten bestimmter Viskositätswerte kann die Mischwendel abreißen, was zu einer Verschlechterung der Mischgüte führt.

Es ist ein Extruder bekannt (US-A-4 759 890), der eine Extruderschnecke aufweist, an die ein Zuführtrichter für das zu verarbeitende Material angeschlossen ist. Dem Extruder werden zum Aufschmelzen und Fördern Granulat oder Gummimischungen zugeführt. Am Ende des Extruders ist ein Werkzeug angebaut, das zum Verarbeiten des Materials vorgesehen ist. Zum Erfassen der Betriebsparameter, nämlich Druck, Temperatur, Viskosität, Drehzahl und Drehmoment ist eine Sensorik vorgesehen, deren Signale durch eine Auswerteelektronik erfasst werden.

Es ist weiterhin ein Extruder bekannt (PATENT ABSTRACTS OF JAPAN vol. 16, no.007, 9. Januar 1992 (1992-1-09) & JP 03 230932 A (SEKISUI CHEM CO LTD:), 14. Oktober 1991 (1991-10-14), bei dem ein Dedektorelement mit einem auf dem Mischrohr angebrachten Sensorelement zusammenwirkt und die erzeugten Impulse in einer Steuerung auswertbar sind. Der Zweck dieser Einrichtung besteht darin, die Streuung oder Veränderung der Kunststofftemperatur zu überwachen und damit die Qualität der erzeugten Artikel durch eine Kontrolle der eingestellten Kunststofftemperatur zu kontrollieren. Der Erfindung liegt die Aufgabe zugrunde, ein derartiges dynamisches Mischrohr so auszubilden, daß eine Überwachung der mechanischen Funktionalität der Mischwendel gewährleistet ist.

Diese Aufgabe wird nach der Erfindung dadurch gelöst, daß an dem Mischelement über seine Länge verteilt Detektorelemente angeordnet sind, die mit einem oder mehreren auf dem Mischrohr angebrachten Sensorelementen zusammenwirken, wobei die erzeugten Impulse in einer Steuerung auswertbar sind.

Eine vorteilhafte Ausführungsform besteht darin, daß als Detektorelemente an der Mischwendel des Mischelementes Metallkörper oder Magnetkörper angebracht sind.

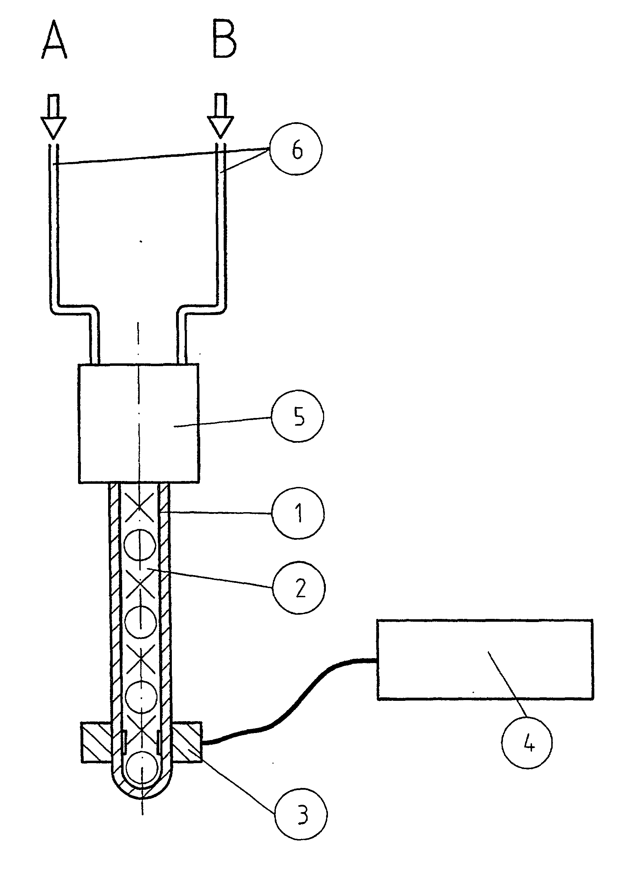

Die Erfindung wird in der nachfolgenden Beschreibung anhand eines in der Zeichnung dargestellten Ausführungsbeispiels näher erläutert.

In der Zeichnung ist eine Ausführungsform der Erfindung schematisch dargestellt, wobei an ein Auslaßventil 5 ein dynamischer Mischer anschließt, bestehend aus einem Kunststoffmischrohr 1, in dem sich ein rotierendes Mischelement 2, insbesondere eine Mischwendel, befindet. Das Auslaßventil 5 ist an eine Materialzuführung 6 angeschlossen, wo die beiden Materialkomponenten A und B zugeführt werden.

An der Mischwendel 2 sind ein oder mehrere Detektorelemente angebracht, die deren Bewegung erfassen und auswerten, indem am Mischrohr 1 Sensorelemente angeordnet sind. Erfolgt ein Bruch der Mischwendel 2 oder ein Aussetzen des Mischantriebes, dann wird ein Signal an eine Auswerteelektronik 4 gegeben und der Fehler optisch und/oder akustisch angezeigt bzw. der Dosiervorgang abgebrochen.

Als Detektorelemente können in oder an die Mischwendel ein- oder mehrere Metallkörper oder Magnetkörper angebracht oder angespritzt werden, wobei diese an einem oder mehreren Punkten der Mischwendel 2 positioniert sein können. Da der Abriss der Mischwendel 2 meistens im Bereich der vorderen Mischelemente, d.h. am Mischrohrausgang stattfindet, ist die Anbringung eines Sensorelementes 3 im vorderen Bereich auf der Manteloberfläche des Mischrohres 1 ausreichend. Das eigentliche Sensorelement 3 ist in entsprechender Position auf der Manteloberfläche des Mischrohres 1 angebracht. Das Sensorelement 3 erzeugt über ein kapazitives, induktives oder magnetoelastisches Prinzip entsprechende Impulse, die dann der Steuerung zugeführt werden.

Als Steuerung 4 kann beispielsweise eine Standard SPS-Steuerung vorgesehen sein, wobei die Auswertung der Sensorsignale über eine entsprechende Software erfolgt. Hierbei erfaßt die SPS die von den Sensorelementen abgegebenen Impulse, die anschließend von der Software ausgewertet werden. Über die Software erfolgt eine Ermittlung der aktuellen Drehzahl und Detektion, ob sich die Mischwendel 2 noch dreht.

## Patentansprüche

1. Dynamisches Mischrohr für eine Vorrichtung zum Dosieren und Mischen von mehrkomponentigen Medien, insbesondere von zwei Materialkomponenten (A, B) mit einem Auslassventil (5) und nachgeordnetem Mischrohr (1) mit einem rotierenden Mischelement (2), **dadurch gekennzeichnet, daß** an dem Mischelement (2) über seine Länge verteilt Detektorelemente angeordnet sind, die mit einem oder mehreren auf dem Mischrohr (1) angebrachten Sensorelementen (3) zusammenwirken, wobei die erzeugten Impulse in einer Steuerung (4) auswertbar sind.

2. Mischrohr nach Anspruch 1, **dadurch gekennzeichnet, daß** als Detektorelemente an der Mischwendel (2) des Mischelementes Metallkörper oder Magnetkörper angebracht sind.

## Claims

1. Dynamic mixing tube for a device for metering and mixing multi-component media, in particular two material components (A, B) with an outlet valve (5) and downstream mixing tube (1) with a rotating mixing element (2), **characterised in that** detector elements are arranged on the mixing element (2) distributed over the length thereof, the detector elements cooperating with one or more sensor elements (3) attached to the mixing tube (1), the pulses generated being adapted for evaluation in a control means (4).

2. Mixing tube according to claim 1, **characterised in that** metal members or magnet members are attached as detector elements to the mixing spiral (2) of the mixing element.

## Revendications

1. Tube mélangeur dynamique pour un dispositif de dosage et de mélange de milieux à plusieurs constituants, en particulier de deux constituants de matière (A, B), comprenant une soupape de décharge (5) et un tube mélangeur disposé en aval (1) muni d'un élément mélangeur rotatif (2), **caractérisé en ce que** des éléments détecteurs sont disposés sur l'élément mélangeur (2), répartis sur sa longueur, qui coopèrent avec un ou plusieurs éléments capteurs (3) montés sur le tube mélangeur (1), les impulsions produites étant exploitables dans une commande (4).

2. Tube mélangeur suivant la revendication 1, **caractérisé en ce que** des corps métalliques ou des corps magnétiques sont montés comme éléments détecteurs sur l'hélice mélangeuse (2).
